# EUROPEAN PATENT APPLICATION

(11) **EP 3 694 083 A1**
(43) Date of publication of application: **12.08.2020**
(21) Application number: 19198178.6
(22) Date of filing: 19.09.2019
(51) Int. Cl.: H02K 1/27

(54) **HIGH SPEED COMPACT ROTOR HAVING HIGH MAGNETIC FIELD**

(30) Priority: 08.02.2019 CH 1592019
(71) Applicant: Portescap, 2300 La Chaux-de-Fonds (CH)
(72) Inventor: ROCHAT, Frédéric, 1023 Crissier (CH); MONTAGNAT-RENTIER, Alexis, 2333 La Ferrière (CH); BAUD, Cyril, 25500 Les Fins (FR)
(74) Representative: Poindron, Cyrille

(57) **Abstract**

Rotor (1) of an high speed electric motor, the rotor (1) comprising:
- a shaft (30) presenting a rotation axis (X), and
- eight magnets (10, 11) arranged on said shaft (30) to form an armature having a circular tubular shape,
- an outer sleeve arranged to cover and secure the eight magnets (10, 11) on the shaft (30),
characterized in that:
- four of the eight magnets (10) are arranged to present a radial magnetisation,
- four others of the eight magnets (11) are arranged to present a tangential magnetisation, and
the magnets (10, 11) are arranged on said shaft (30) so that each of the four magnets (10) arranged to present the radial magnetisation is adjacent to two of the four magnets (11) arranged to present the tangential magnetisation.

## Description

The present invention relates to the field of electrical motors, in particular slotless motors and their rotor, for the application of industrial power tools and medical surgery tools, such as screwdrivers and nut runners.

The document JP2015070786 describes a motor with permanent magnets surrounded by a sleeve.

The drawback of the rotor and the electric motor of the prior art document is that the magnetic performance is lowered due to the presence of the sleeve since the sleeve thickness increase the airgap, and thereby the performance of the electric motor is low.

The present invention aims to address the above mentioned drawback of the prior art.

In this aim, a first aspect of the invention is a rotor for an high speed electric motor, the rotor comprising:
- a shaft presenting a rotation axis, and
- eight magnets arranged on said shaft to form an armature having a circular tubular shape presenting the rotation axis, and
   wherein each magnet presents a North pole and a South pole, and
- an outer sleeve arranged to cover at least partially and secure the eight magnets on the shaft,
characterized in that:
- four of the eight magnets are arranged to present a radial magnetisation,
- four others of the eight magnets are arranged to present a tangential magnetisation, and
   the magnets are arranged on said shaft so that each of the four magnets presenting the radial magnetisation is adjacent to two of the four magnets presenting the tangential magnetisation.

In other words, for the four of the eight magnets arranged to present the radial magnetisation, the North pole and the South pole are arranged on a same radial direction,

In other words, for the four others of the eight magnets arranged to present the tangential magnetisation, the North poles and the South poles are each respectively arranged on different radial directions. That is to say, the North pole and the South pole are arranged on a same radius.

This allows to propose a rotor for an high speed slotless and brushless motor with high performances, in particular due to high magnetic performances of the rotor. The motor is a 4-pole motor, but may be also a 6-pole motor.

In industrial power tools, rotor and motor with high performances are required for this high demanding application. The typical cycle of use is a long run phase or so-called rundown phase, with high speed and low torque and a short tightening phase with low speed and high torque. The usual configuration for high speed is two poles motor, while the usual configuration for high torque is four poles motor or motor with more poles. The rotor and motor according to the present invention allow to reach high performances, with high torque and high speed on each relevant phase of the working cycle. The motor is able to reach a speed of 10 000 rpm, up to 40 000 rpm, without being limited to such values. The torque is typically around 3 Nm, without being limited to such value, which can be 5 Nm.

In addition, the rotor according to the present invention presents a very compact design for high performances.

The configuration of the different magnetizations of the magnets allows to compensate the loss of magnetic field due to the presence of the sleeve for high speed electric motor providing high torque, and also allows to increase performances of the electrical motor.

Advantageously, each magnet forms an eighth of the circular tubular shape, with lateral surfaces in a plane comprising the rotation axis.

This allows to propose a rotor having a very compact design.

Advantageously, two of the magnets are arranged to present the radial magnetisation outwardly oriented from the shaft, with the North poles on the side of the sleeve, and are arranged in radial opposition on said shaft.

Advantageously, two others of the magnets are arranged to present the radial magnetisation inwardly oriented to the shaft, with the North poles on the side of the shaft, and are arranged in radial opposition on said shaft.

This allows to increase the magnetic performances of the rotor and the high speed motor.

Advantageously, four others of the magnets are arranged to present the tangential magnetisation oriented in the direction of the two magnets presenting the radial magnetisation arranged outwardly from the shaft, with the North poles of the four others magnets arranged on the side of the two magnets presenting the outwardly oriented radial magnetisation.

This allows to increase the magnetic performances of the rotor and the high speed motor, with an high magnetic cooperation of all the magnets around the shaft.

Advantageously, the eight magnets are presenting a same angular dimension between the lateral surfaces.

Advantageously, each magnet presents an angular dimension between the lateral surfaces, and
the four magnets arranged to present the radial magnetisation have the angular dimension that is half the angular dimension of the four magnets arranged to present the tangential magnetisation.

Advantageously, each magnet presents an angular dimension between the lateral surfaces, and
the four magnets arranged to present the radial magnetisation have the angular dimension that is twice the angular dimension of the four magnets arranged to present the tangential magnetisation.

Advantageously, each magnet presents an angular dimension between the lateral surfaces, and
the four magnets arranged to present the radial magnetisation have the angular dimension that is different from the angular dimension of the four magnets arranged to present the tangential magnetisation.

This difference can be a ratio of one third, one fourth, one fifth, or any other suitable ratio.

This allows to adjust the shape of the magnetic fields of the rotor to increase the performances of the rotor and of the high speed motor.

Advantageously, each magnet presenting the radial magnetisation comprises on a radial cross-section a pole point located on an outer surface of the magnet, and at equidistance from lateral surfaces of the magnet, and
wherein each magnet has a radial thickness, and
wherein a ratio between an arc between two nearest pole points and the radial thickness is lower than 3, preferably lower than 2.5.

This allows to have a rotor with a very compact design and high performances.

A second aspect is a rotor for an high speed electric motor, the rotor comprising:
- a shaft presenting a rotation axis, and
- twelve magnets arranged on said shaft to form an armature having a circular tubular shape presenting the rotation axis, and
   wherein each magnet presents a North pole and a South pole and
- an outer sleeve arranged to cover at least partially and secure the twelve magnets on the shaft,
characterized in that:
- six of the twelve magnets are arranged to present a radial magnetisation,
- six others of the twelve magnets are arranged to present a tangential magnetisation, and
   the magnets are arranged on said shaft so that each of the six magnets presenting the radial magnetisation is adjacent to two of the six other magnets presenting the tangential magnetisation,
wherein each magnets forms a twelfth of the circular tubular shape, with lateral surfaces in a plane comprising the rotation axis,
wherein the magnets presenting the radial magnetisation outwardly or inwardly oriented from the shaft are arranged in radial opposition on said shaft, and are arranged around the shaft so as to be successively inwardly oriented and outwardly oriented, and
the six others of the magnets are arranged to present the tangential magnetisation oriented in the direction of the magnets presenting the radial magnetisation arranged outwardly from the shaft, with the North poles of the six others magnets arranged on the side of the magnets presenting the outwardly oriented radial magnetisation.

This allows to propose a rotor for an high speed slotless and brushless motor with high performances, in particular due to high magnetic performances of the rotor. The motor is a 6-pole motor.

Advantageously, each magnet presents an angular dimension between the lateral surfaces, and
the six magnets arranged to present the radial magnetisation have the angular dimension that is twice the angular dimension of the six magnets arranged to present the tangential magnetisation.

Advantageously, each magnet presents an angular dimension between the lateral surfaces, and
the six magnets arranged to present the radial magnetisation have the angular dimension that is different from the angular dimension of the six magnets arranged to present the tangential magnetisation.

This difference can be a ratio of one third, one fourth, one fifth, or any other suitable ratio.

This allows to adjust the shape of the magnetic fields of the rotor to increase the performances of the rotor and of the high speed motor.

A third aspect of the present invention is an high speed electric motor comprising one rotor according to the first aspect or to the second aspect of the present invention.

This allows to propose a brushless motor with high performances and high compacity. The motor is a 4-pole motor or a 6-pole motor, or with more poles. Advantageously, the motor is a slotless motor.

This allows to propose a motor with a compact design and a compact coil.

Other features and advantages of the present invention will appear more clearly from the following detailed description of particular non-limitative examples of the invention, illustrated by the appended drawings where:

- figure 1 represents an electrical motor according to the present invention,

- figure 2 represents a rotor of the electrical motor according to the present invention, in a longitudinal cross section;

- figure 3 represents the rotor of the electrical motor according to the present invention, in a radial cross section ;

- figure 4 represents the rotor of the electrical motor according to a second embodiment, in a radial cross section;

- figure 5 represents the rotor of the electrical motor according to the second aspect, in a radial cross section;

- figure 6 represents a detailed view of a magnet of the rotor, which has its magnetization oriented radially and outwardly,

- figure 7 represents a detailed view of another magnet of the rotor, which has its magnetization oriented radially and inwardly,

- figure 8 represents a detailed view of still another magnet of the rotor, which has its magnetization oriented tangentially and clockwise,

- figure 9 represents a detailed view of still another magnet of the rotor, which has its magnetization oriented tangentially and anti-clockwise.

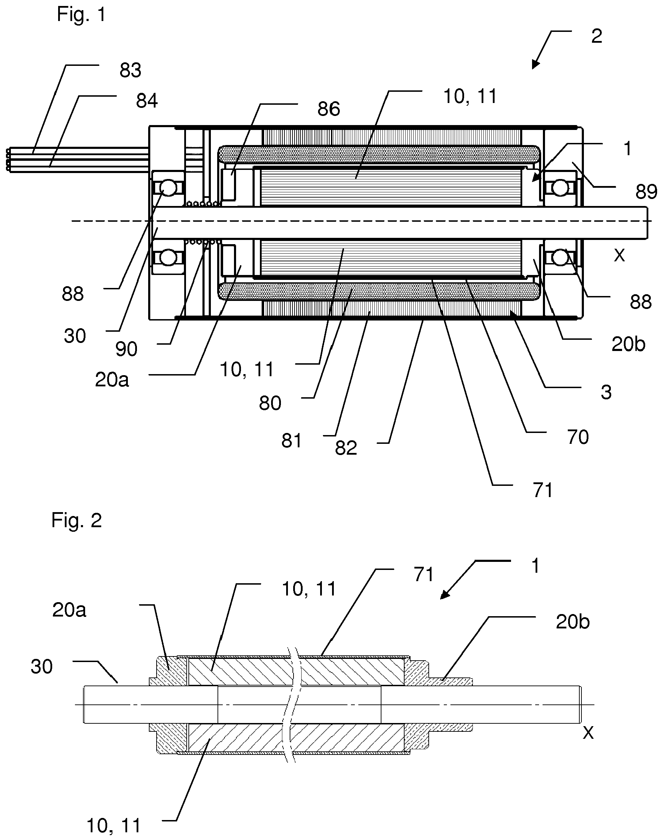

Figure 1 represents the electric motor according to the present invention.

The high speed brushless and slotless electrical motor 2 comprises a rotor 1 and a stator 3. The rotor 1 comprises eight magnets or tiles 10, 11 mounted on a shaft 30. The eight magnets 10, 11 are surrounded by an outer sleeve 71, forming an outer surface of the rotor 1, and securing the magnets 10, 11 on said shaft 30. The magnets 10, 11 are facing the stator 3 of the electric motor 2 through the sleeve 71. An air gap 70 is formed between the sleeve 71 and the stator 3. We consider the outer surface is cylindrical in the given example.

The eight magnets 10, 11 are mounted on the shaft 30 but may also be mounted on a support member installed on the shaft 30

The shaft 30 presents a rotation axis X and forms an elongated shape along the longitudinal dimension.

The rotor 1 further comprises two rings 20a, 20b, mounted by press-fitting, welding, gluing or the like on the shaft 30 to be secured on said shaft 30. The two rings 20a, 20b are mounted at each longitudinal extremity of the shaft 30 and at the longitudinal extremity of magnets 10, 11 mounted on shaft 30.

Each ring 20a, 20b may comprises a collar portion (not represented), that is continuously surrounding the magnets 10, 11 thereby providing an abutment. Each magnet 10, 11 may comprise a corresponding portion or a chamfer (not represented), corresponding to the collar portions of the two rings 20a, 20b providing the radial engagement to overcome the centrifugal forces during rotation of the rotor 1.

The stator of the electric slotless motor 2 comprises a coil of electrical wires 80 made out of copper or any other metallic material or material adapted to conduct electricity, and lamination stack 81, mounted over said coil 80 and axially maintained by two plastic or steel rings.

The electric motor 2 further comprises a set of phase wires or live wires 83 connected to the coil 80 and a set of coder wires 84 connected to the coder or incremental coder, that could be a Hall effect sensor as an example, arranged to monitor the rotating speed or rotating displacement of the rotor 1, with the help of magnet 86 and magnet support mounted on the ring 20a or directly on shaft 30.

The electric motor 2 further comprises a set of bearings, such as ball bearings 88 and main flanges 89, made out of aluminium or steel, and mounted at each of its longitudinal extremities, and a spring 90 arranged to preload the ball bearing 88. The electric motor 2 further comprises an electric motor tube 82. The lamination stack 81 is maintained into the electric motor tube 82 by the two plastic or steel rings, and the coil 80 is glued in said electric motor tube 82 and lamination stack 81.

In a cross-section, starting from shaft 30 and going outwardly in a radial direction, the shaft 30 is supporting the eight magnets 10, 11, which are encircled by the sleeve 71, then the air gap 70 surrounds the sleeve 71, and then the coil 80 is mounted inside the lamination stack 81, and installed in the electric motor tube 82.

As an alternative, the electric motor 2 can be sensorless, that is to say with only phase cable.

Figure 2 represents the rotor of the electrical motor according to the present invention, in a longitudinal cross section.

The rotor 1 comprises said eight magnets 10, 11 mounted on the shaft 30 and being made out of steel. The plurality of eight magnets 10, 11 are surrounded and maintained by the sleeve 71, forming the cylindrical outer surface of the rotor 1. The magnets 10, 11 are thereby magnetically facing the stator 3 of the electrical motor 2. The air gap 70 is formed between the outer sleeve 71 and the stator 3.

In the figures 1 and 2, the rotor 1 is represented with a monobloc shaft 30. That is to say, the eight magnets 10, 11 can either be installed on a support member 40 (not represented) mounted on shaft 30, than on monobloc shaft 30 without support member 40.

The rotor 1 present the rotation axis X.

The rotor 1 comprises the two rings 20a, 20b, mounted by press-fitting, welding, gluing or the like on said shaft 30 to be secured on said shaft 30, made out of steel. The two rings 20a, 20b are mounted at each longitudinal extremity of the shaft 30 and at the longitudinal extremity of magnets 10, 11 mounted on shaft 30. Each ring 20a, 20b is made out of metal such as steel, mild steel or brass.

The remaining mechanical gaps of the rotor 1 can be filled with glue, to limit parasitic movements. Glue is therefore mainly compressed so that there is no deterioration of the glue.

The length of the rotor 1 can be adapted. The shaft 30 has a length of 100 to 120 mm, without being limited to such values.

The diameter of the rotor 1 can be adapted. The magnets 10, 11 have an outer diameter of 22 mm, 17 mm or 10 mm in different diameter versions, for an inner diameter of 7 mm, 5 mm, or 3 mm respectively; while the shaft 30 has a diameter of 7 mm, 5 mm, or 3 mm respectively. The sleeve 71 has a thickness of 0.1 to 0.4 mm. The electric motor tube 82 has a diameter of 40 mm, 32 mm or 20 mm in said different diameter versions, respectively.

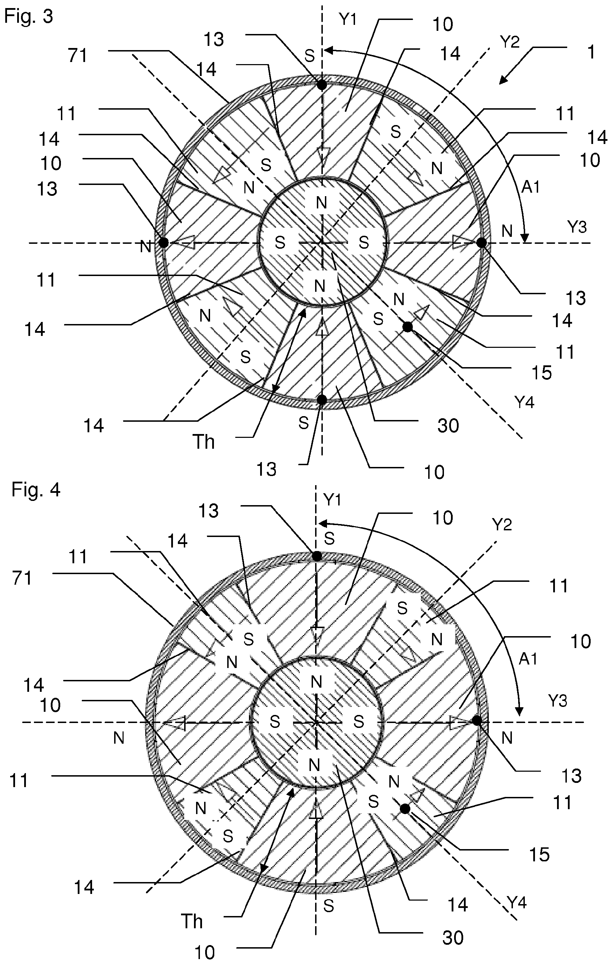

Figure 3 represents the rotor of the electrical motor according to the present invention, in a radial cross section.

The rotor 1 is represented with the eight magnets 10, 11 mounted on shaft 30, and surrounded by the outer sleeve 71. The sleeve 71 has the functions of positioning the magnets 10, 11 during assembly, retaining the magnets 10, 11 at high speed rotation, such as more than 10 000 rpm, or more than 20 000 rpm or more than 40 000 rpm for high speed. The sleeve 71 also improves the mechanical stability during rotation of the rotor 1.

The eight magnets 10, 11 are represented with their magnetization symbolized by arrows on figure 3. Each arrow symbolize the North pole and the South pole orientation of each magnets 10, 11. Each arrows is oriented in the direction of the North pole of each magnets 10, 11.

Each magnet 10, 11 presents lateral surfaces 14 in a plane comprising the axis of rotation X of the shaft 30 and arranged to be in contact with the contiguous magnet 10, 11.

In the embodiment of the figure 3, the eights magnets 10, 11 are arranged on shaft 30 in order to have two magnets 10 installed in radial opposition, where these two magnets 10 have their magnetization radially oriented in the direction of the shaft 30. That is to say, their magnetization is inwardly oriented, with the North poles in the direction of the shaft 30, and the South pole in the direction of the sleeve 71. The radial magnetization means that the North pole and the South pole are arranged on a radial direction.

The North poles are symbolized in figure 3 with a "N", while the South poles are symbolized with a "S". The two magnets 10 are mounted on the shaft 30 in radial opposite direction, along a radial axis Y1 of the shaft 30.

In addition, two others 10 of the magnets having the radial magnetization 10 have their magnetization radially oriented in the direction of the sleeve 71. In other words, the North pole of each of this two other magnets 10 is oriented in the direction of the sleeve 71, while the South pole is oriented in the direction of the shaft 30. This two other magnets 10 are mounted on shaft 30 in radial opposite direction, along a radial axis Y3 of the shaft 30 that is perpendicular with the axis Y1.

On the eight magnets 10, 11, four magnets 11 are arranged to present a tangential magnetization, that is to say that their North poles and South poles are forming a flux line that is tangentially oriented. In other words, the arrows representing their magnetization, which is oriented to the North pole, is tangential. The tangential magnetization means that the North poles and the South poles are each respectively arranged on the lateral surfaces 14 of the magnets 11.

These four magnets 11 have their magnetization oriented in the direction of the magnets 10 having their North pole located on the side of the sleeve 71.

Thus, two of this four magnets 11 presenting the tangential magnetization are placed on radial opposite position, along a radial axis Y4 of the shaft 30, which forms a 45° degrees angle with both axis Y1 and Y3. The magnetic flux line of this two magnet 11 is represented by arrows on figure 3, which arrows are perpendicular with the axis Y4. The North poles of this two magnets 11 is oriented in the direction of the axis Y3.

The two others of this four magnets 11 presenting the tangential magnetization are placed on radial opposite position, along a radial axis Y2 of the shaft 30, which forms a 45° degrees angle with both axis Y1 and Y3. Their magnetic flux line is represented in figure 3 by arrows oriented in the direction of their North pole. The arrows are perpendicular to the axis Y2. Their North poles are oriented in the direction of the axis Y3.

In other words, the eight magnets 10, 11 are mounted on the shaft 30 to form a cylinder, and are secured by the sleeve 71 having a tubular shape. Each magnet 10, 11 forms an octant annular shape, or eighth of circular tubular shape, having an inner diameter equal to the diameter of the shaft 30 and an outer diameter equal to the diameter of the sleeve 71.

The defined number of magnets 10, 11 allows to limit the number of interfaces between the magnets 10, 11 together near their lateral surfaces 14, thereby increasing the performances.

Starting from the first magnet 10 on Y1, on the top of the figure 3, with radial inward magnetization, and going clockwise, there is then second magnet 11 with tangential magnetization oriented to the third magnet 10 having radial outward magnetization. Then, fourth magnet 11 with tangential magnetization oriented to the third magnet 10, then fifth magnet 10 with inward magnetization. The sixth magnet 11 has tangential magnetization oriented to the seventh magnet 10 having radial outward magnetization, and the eighth magnet 11 with tangential magnetization oriented to the seventh magnet 10.

In other words, each magnet having the radial magnetization 10 is adjacent or contiguous to one of the magnets having the tangential magnetization 11. And the magnets having the radial magnetization outwardly oriented 10 are contiguous to two magnets having the tangential magnetization 11, with the tangential magnetization oriented toward the magnets having the radial magnetization outwardly oriented 10.

That is to say, the magnets 10 having the radial magnetization are arranged between the magnets 11 having the tangential magnetization.

The configuration of the different magnetization of the magnets 10, 11 allows to compensate the field loss due to the presence of the sleeve 71 for high speed electric motor 2 providing high torque, and also to increase performances of the electrical motor 2.

Each one of the magnets 10, 11 is arranged on shaft 30 to present a shifted magnetization compared to the adjacent magnet 10, 11.

Each magnet 10 presenting the radial magnetization comprises on the radial cross-section a pole point 13 (symbolized by a dot on the figures 3 and 4) located on an outer surface of the magnet 10, and at equidistance from the edges or lateral surfaces 14 of the magnet 10. For sake of clarity of the figures 3 and 4, not all the lateral surfaces 14 of the magnets are represented.

Each magnet 10, 11 has a radial thickness Th, and a ratio between an arc between A1 two nearest pole points 13 and the radial thickness Th is lower than 3, preferably lower than 2.5, more preferably lower than 2. This allows to form a very compact rotor 1 with high magnetic performances.

Each magnets 10, 11 presents a point located on a radial line, at equidistance from the lateral surfaces 14 and at equidistance from the inner and the outer diameter, so-called the center 15 of magnet (symbolized by a dot on the figures 3 and 4). At the center 15, the magnetic flux line is tangential for the magnets 11 having the tangential magnetization. Comparing adjacent magnets 10, 11, the magnetic flux lines of two adjacent magnets 10, 11 at their center 15 are perpendicular.

Figure 4 represents the rotor of the electrical motor according to the second embodiment of the present invention, in a radial cross section.

The reference numbers of the figures 3 and 4 are common, and will not be further detailed.

When mounted on the shaft 30, each magnet 10, 11 being the eighth of the annular shape, presents the lateral surfaces 14 in the plane comprising the axis of rotation X of the shaft 30 and arranged to be in contact with the contiguous magnet 10, 11 at the level of the lateral surfaces 14. Each magnet 10, 11 presents axial surfaces at each extremity along the rotation axis X. Each magnet 10, 11 presents an angular dimension which is the angle between the lateral surfaces 14 of one single magnet 10, 11.

It this second embodiment, the magnets having the radial magnetization 10 have the angular dimension between the lateral surfaces 14 that it twice the angular dimension 14 of the magnets 11 having the tangential magnetization. The ratio twice can be adjusted to half or a different ratio, in order to optimize the magnetic field. The ratio can also be different, such as a third, a fourth, a fifth, or any suitable ratio optimizing the magnetic field, to the need of high speed and high torque.

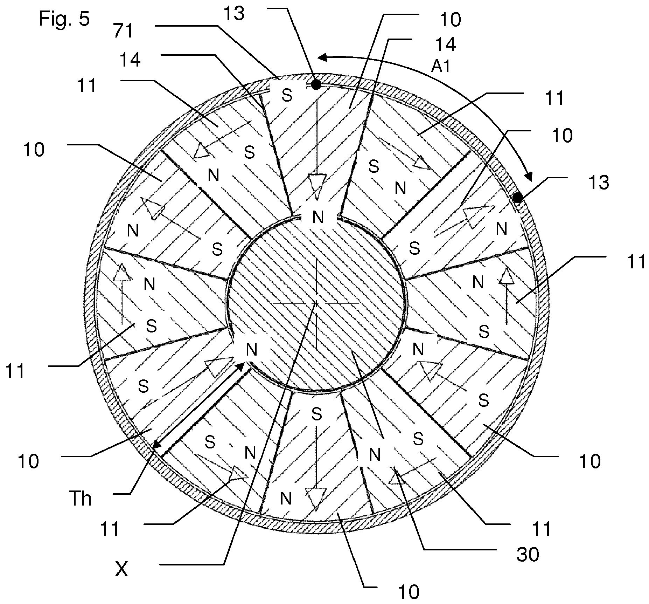

Figure 5 represents the rotor of the electrical motor according to the second aspect of the present invention, in a radial cross section.

The common reference numbers from the first aspect of the present invention are kept and re-used for the description of the second aspect and the third aspect, as far as possible.

The rotor for the high speed electric motor comprises:
- the shaft 30 presenting the rotation axis X, and
- twelve magnets 10, 11 arranged on said shaft 30 to form an armature having a circular tubular shape presenting the rotation axis, and
   wherein each magnet 10, 11 presents one North pole and one South pole and
- the outer sleeve arranged to cover at least partially and secure the twelve magnets 10, 11 on the shaft,
- six of the twelve magnets 10 are arranged to present the radial magnetisation,
- six others of the twelve magnets 11 are arranged to present the tangential magnetisation, and
   the magnets are arranged on said shaft 30 so that each of the six magnets 10 presenting the radial magnetisation is adjacent to two of the six other magnets 11 presenting the tangential magnetisation,
wherein each magnets forms a twelfth of the circular tubular shape, with lateral surfaces in a plane comprising the rotation axis X,
wherein the magnets 10 presenting the radial magnetisation outwardly or inwardly oriented from the shaft 30 are arranged in radial opposition on said shaft 30, and are arranged around the shaft 30 so as to be successively inwardly oriented and outwardly oriented, and
the six others 11 of the magnets are arranged to present the tangential magnetisation oriented in the direction of the magnets 10 presenting the radial magnetisation arranged outwardly from the shaft 30, with the North poles of the six others 11 magnets arranged on the side of the magnets 10 presenting the outwardly oriented radial magnetisation.

In other words, the magnets 10, 11 are arranged on the shaft 30 so as to be in such order clockwise:
- at 12 hours, one magnet with inward magnetization,
- at 1 hour, one magnet with tangential magnetization oriented toward the magnet at 2 hours,
- at 2 hours, one magnet with outward magnetization,
- at 3 hours, one magnet with tangential magnetization oriented toward the magnet at 2 hours,
- at 4 hours, one magnet with inward magnetization,
- at 5 hours, one magnet with tangential magnetization oriented toward the magnet at 6 hours,
- at 6 hours, one magnet with outward magnetization,
- at 7 hours, one magnet with tangential magnetization oriented toward the magnet 6 hours,
- at 8 hours, one magnet with inward magnetization,
- at 9 hours, one magnet with tangential magnetization oriented toward the magnet at 10 hours,
- at 10 hours, one magnet with outward magnetization,
- at 11 hours, one magnet with tangential magnetization oriented toward the magnet at 10 hours.

The magnets having the radial magnetization 10 have the angular dimension between the lateral surfaces 14 that it equal to the angular dimension of the magnets 11 having the tangential magnetization. The ratio equal can be adjusted to half, twice or a different ratio, in order to optimize the magnetic field. The ratio can also be different, such as a third, a fourth, a fifth, or any suitable ratio optimizing the magnetic field, to the need of high speed and high torque.

Each magnet 10 presenting the radial magnetization comprises on the radial cross-section the pole point 13 (symbolized by a dot on the figure 5) located on an outer surface of the magnet 10, and at equidistance from the edges or lateral surfaces 14 of the magnet 10. For sake of clarity of the figure 5, not all the lateral surfaces 14 of the magnets are represented.

Each magnet 10, 11 has a radial thickness Th, and the ratio between the arc between A1 two nearest pole points 13 and the radial thickness Th is lower than 3, preferably lower than 2.5, more preferably lower than 2. This allows to form a very compact rotor 1 with high magnetic performances for the 6-pole motor.

Finally, in other words, the 4-pole and 6-pole motors comprise their respective number of magnets, wherein the magnets having the radial magnetization are arranged to be adjacent to magnets having tangential magnetization, wherein the magnets having the radial magnetization are arranged by pair to face in a radial direction and the magnets having the tangential magnetization are arranged to have their magnetization oriented towards the magnets having the outward magnetization.

It is also possible to arrange sixteen magnets to form a 8-pole motor wherein the magnets having the radial magnetization are arranged to be adjacent to magnets having tangential magnetization, wherein the magnets having the radial magnetization are arranged by pair to face in a radial direction and the magnets having the tangential magnetization are arranged to have their magnetization oriented towards the magnets having the outward magnetization. Two pairs of magnets having the radial magnetization are arranged in radial opposition and with there magnetization towards the external direction, while the two other pairs of magnets having the radial magnetization are arranged in radial opposition and with there magnetization inwardly oriented. In addition, seen clock wisely, one magnet with radial magnetization outwardly oriented is adjacent to one magnet having the tangential magnetization, then followed by one magnet having the radial magnetization inwardly oriented, then by one magnet having the tangential magnetization and then by one magnet having the radial magnetization outwardly oriented, and to be continued for the whole circle.

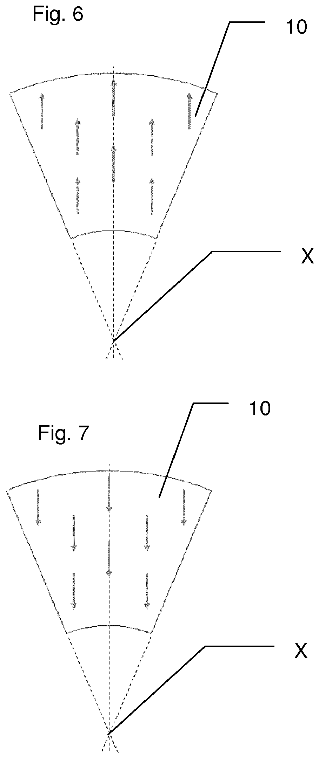

Figure 6 represents the detailed view of a magnet of the rotor, which has its magnetization oriented radially and outwardly.

In figure 6, the magnet 10 has a radial magnetization oriented outwardly from the rotation axis X. The magnetization is parallel to the mid-plane of the magnet 10, which has the shape of a crown area. Mid-plane and side plane of magnet 10 are co-radial. The magnetization is oriented away from the rotation axis X.

Figure 7 represents the detailed view of another magnet of the rotor, which has its magnetization oriented radially and inwardly.

In figure 7, the magnet 10 has a radial magnetization oriented inwardly from the rotation axis X. Magnetization is parallel to the mid-plane of the magnet 10 , which has the shape of a crown area. Mid-plane and side plane of magnet 10 are co-radial. The magnetization is oriented toward the rotation axis X.

Magnets 10 in figures 6 and 7 are the same unmagnetized magnet at the unmagnetized state but are then magnetized in opposite direction.

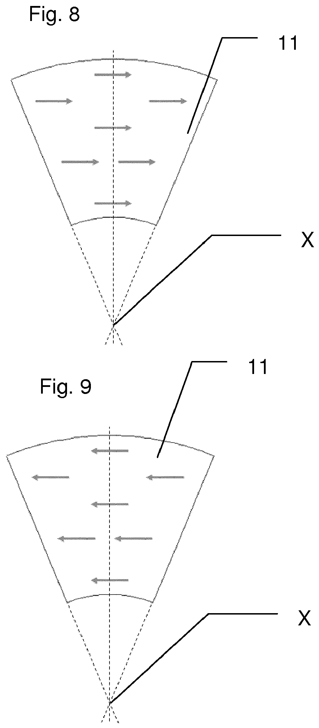

Figure 8 represents the detailed view of still another magnet of the rotor, which has its magnetization oriented tangentially and clockwise.

In figure 8, the magnet 11 has a tangential magnetization oriented clockwise. The magnetization is orthogonal to the mid-plane of the magnet 11, and has the shape of a crown area. Mid-plane and side plane of magnet 11 are co-radial.

Figure 9 represents the detailed view of still another magnet of the rotor, which has its magnetization oriented tangentially and anti-clockwise.

In figure 9, the magnet 11 has a tangential magnetization oriented anti-clockwise. Magnetization is orthogonal to the mid-plane of the magnet 11, which has the shape of a crown area. Mid-plan and side plane of magnet 11 are co-radial.

The magnets 11 in figure 8 and 9 are the same magnet but flipped.

It is of course understood that obvious improvements and/or modifications for one skilled in the art may be implemented, still being under the scope of the invention as it is defined by the appended claims.

## Claims

1. Rotor (1) for an high speed electric motor (2), the rotor (1) comprising:
- a shaft (30) presenting a rotation axis (X), and
- eight magnets (10, 11) arranged on said shaft (30) to form an armature having a circular tubular shape presenting the rotation axis (X), and
wherein each magnet (10, 11) presents a North pole and a South pole and
- an outer sleeve arranged to cover at least partially and secure the eight magnets (10, 11) on the shaft (30),
**characterized in that**:
- four of the eight magnets (10) are arranged to present a radial magnetisation,
- four others of the eight magnets (11) are arranged to present a tangential magnetisation, and
the magnets (10, 11) are arranged on said shaft (30) so that each of the four magnets (10) presenting the radial magnetisation is adjacent to two of the four magnets (11) presenting the tangential magnetisation.

2. Rotor (1) as claimed in the preceding claim, wherein each magnets (10, 11) forms an eighth of the circular tubular shape, with lateral surfaces (14) in a plane comprising the rotation axis (X).

3. Rotor (1) as claimed in any one of the claims 1 to 2, wherein two of the magnets (10) are arranged to present the radial magnetisation outwardly oriented from the shaft (30), with the North poles on the side of the sleeve (71), and are arranged in radial opposition on said shaft (30), and two others of the magnets (10) are arranged to present the radial magnetisation inwardly oriented to the shaft (30), with the North poles on the side of the shaft (30), and are arranged in radial opposition on said shaft (30).

4. Rotor (1) as claimed in the preceding claim, wherein four others of the magnets (11) are arranged to present the tangential magnetisation oriented in the direction of the two magnets (10) presenting the radial magnetisation arranged outwardly from the shaft (30), with the North poles of the four others magnets (11) arranged on the side of the two magnets (10) presenting the outwardly oriented radial magnetisation.

5. Rotor (1) as claimed in any one of the preceding claims, wherein the eight magnets (10, 11) are presenting a same angular dimension between the lateral surfaces (14).

6. Rotor (1) as claimed in any one of the claims 1 to 4, wherein each magnet (10, 11) presents an angular dimension between the lateral surfaces (14), and
the four magnets (10) arranged to present the radial magnetisation have the angular dimension that is half the angular dimension of the four magnets (11) arranged to present the tangential magnetisation.

7. Rotor (1) as claimed in any one of the claims 1 to 4, wherein each magnet (10, 11) presents an angular dimension between the lateral surfaces (14), and
the four magnets (10) arranged to present the radial magnetisation have the angular dimension that is twice the angular dimension of the four magnets (11) arranged to present the tangential magnetisation.

8. Rotor (1) for an high speed electric motor (2), the rotor (1) comprising:
- a shaft (30) presenting a rotation axis (X), and
- twelve magnets (10, 11) arranged on said shaft (30) to form an armature having a circular tubular shape presenting the rotation axis (X), and
wherein each magnet (10, 11) presents a North pole and a South pole and
- an outer sleeve arranged to cover at least partially and secure the twelve magnets (10, 11) on the shaft (30),
**characterized in that**:
- six of the twelve magnets (10) are arranged to present a radial magnetisation,
- six others of the twelve magnets (11) are arranged to present a tangential magnetisation, and
the magnets (10, 11) are arranged on said shaft (30) so that each of the six magnets (10) presenting the radial magnetisation is adjacent to two of the six other magnets (11) presenting the tangential magnetisation,
wherein each magnets (10, 11) forms a twelfth of the circular tubular shape, with lateral surfaces (14) in a plane comprising the rotation axis (X),
wherein the magnets (10) presenting the radial magnetisation outwardly or inwardly oriented from the shaft (30) are arranged in radial opposition on said shaft (30), and are arranged around the shaft (30) so as to be successively inwardly oriented and outwardly oriented, and
the six others of the magnets (11) are arranged to present the tangential magnetisation oriented in the direction of the magnets (10) presenting the radial magnetisation arranged outwardly from the shaft (30), with the North poles of the six others magnets (11) arranged on the side of the magnets (10) presenting the outwardly oriented radial magnetisation.

9. Rotor (1) as claimed in any one of the preceding claims, wherein each magnet (10) presenting the radial magnetisation comprises on a radial cross-section a pole point located on an outer surface of the magnet (10), and at equidistance from lateral surfaces (14) of the magnet (10), and wherein each magnet (10) has a radial thickness, and
wherein a ratio between an arc between two nearest pole points and the radial thickness is lower than 3, preferably lower than 2.5.

10. High speed electric motor (2) comprising one rotor (1) as claimed in any one of the preceding claims.
